# EUROPÄISCHE PATENTSCHRIFT

(11) **EP 3 297 890 B1**
(45) Veröffentlichungstag und Bekanntmachung des Hinweises auf die Patenterteilung: **18.09.2019**
(21) Anmeldenummer: 16728231.8
(22) Anmeldetag: 19.05.2016
(51) Int. Cl.: B62D 5/00

(54) **ARRETIERVORRICHTUNGEN**
LOCKING DEVICES
DISPOSITIFS DE BLOCAGE

(30) Priorität: 22.05.2015 DE 102015209522; 11.06.2015 DE 102015210729
(43) Veröffentlichungstag der Anmeldung: 28.03.2018
(73) Patentinhaber: Joyson Safety Systems Germany GmbH, 63743 Aschaffenburg (DE)
(72) Erfinder: MARKFORT, Dieter, 13088 Berlin (DE)
(74) Vertreter: Maikowski & Ninnemann Patentanwälte Partnerschaft mbB
(86) Internationale Anmeldenummer: PCT/EP2016/061253
(87) Internationale Veröffentlichungsnummer: WO 2016/188852

(56) Entgegenhaltungen:
- DE-A1- 10 323 042
- US-A1- 2008 073 143
- US-A1- 2014 000 976

## Beschreibung

Die Erfindung betrifft eine Arretiervorrichtung, insbesondere für einen Überlagerungsantrieb einer Überlagerungslenkung eines Kraftfahrzeuges, zum Arretieren einer bewegbaren Komponente gemäß dem Oberbegriff des Anspruchs 1.

Derartige Arretiervorrichtungen sind aus dem Stand der Technik bekannt. Beispielsweise offenbaren die US 2008/0073143 A1 , US 2014/0000976 A1, DE 10323042 A1 und DE 102010037384 A1 eine gattungsgemäße elektromagnetische Verriegelungseinrichtung mit einem axial beweglichen Verriegelungselement (Arretierelement), das durch die Rückstellkraft einer Druckfeder in eine Verriegelungsposition (Arretierposition) gebracht werden kann.

Insbesondere bei Arretiervorrichtungen mit einem Arretierelement, welches zur Arretierung eines drehenden Antriebes einer Überlagerungslenkung mit diesem mechanisch in Eingriff gebracht wird, kommt es zu Geräuschentwicklungen, wenn bewegte Teile der Arretiervorrichtung ihre Endlagen erreichen. Das betrifft sowohl das zwischen einer Freigabeposition und einer Arretierposition hin- und herbewegte Arretierelement als auch die das Arretierelement antreibenden Elemente. Besonders störend ist eine Geräuschentwicklung, wenn die Arretiervorrichtung im unmittelbaren Hörbereich einer Person eingesetzt werden soll, wie es beispielsweise bei einer im Lenkrad angeordneten Überlagerungslenkung der Fall ist.

Das der Erfindung zugrunde liegende Problem besteht darin, eine Geräuschentwicklung beim Betrieb einer Arretierungsvorrichtung soweit wie möglich zu reduzieren.

Dieses Problem wird durch die Arretiervorrichtung mit den Merkmalen gemäß Anspruch 1 sowie durch die Arretiervorrichtung mit den Merkmalen gemäß Anspruch 18 gelöst. Weiterbildungen der Erfindung sind in den abhängigen Ansprüchen angegeben.

Danach wird eine Arretiervorrichtung, insbesondere für einen Überlagerungsantrieb einer Überlagerungslenkung, zum Arretieren einer bewegbaren Komponente bereitgestellt, mit
- einem zwischen einer Arretier- und Freigabeposition hin- und herbewegbaren Arretierelement, das in der Arretierposition mit der bewegbaren Komponente zusammenwirkt (die bewegbare Komponente arretiert); und
- einem mit dem Arretierelement gekoppelten elastischen Element zum Bewegen des Arretierelementes (insbesondere durch Ausüben einer Rückstellkraft auf das Arretierelement);
- mindestens einem Anschlag, wobei das Arretierelement relativ zu dem Anschlag bewegbar ist, wobei
- das elastische Element so beschaffen und mit dem Arretierelement gekoppelt ist, dass es sich zumindest in der Arretierposition des Arretierelementes in Kontakt mit dem Anschlag befindet, wobei der Anschlag so angeordnet ist, dass durch den Kontakt des elastischen Elementes mit dem Anschlag eine Bewegung des Arretierelementes in die Arretierposition begrenzt wird.

Bei dem Anschlag handelt es sich insbesondere um eine (feste) Anschlagsfläche, die zum Beispiel senkrecht oder schräg zur Bewegungsrichtung des Arretierelementes orientiert ist. Bei einer Bewegung des Arretierelementes wird das elastische Element zumindest teilweise mitgenommen, so dass es mit dem Anschlag in (unmittelbaren) Kontakt kommt. Durch den Kontakt des elastischen Elementes mit dem Anschlag wird die Bewegung des Arretierelementes in die Arretierposition begrenzt und gedämpft, wodurch einer Geräuschentwicklung entgegenwirkt wird. Insbesondere befindet sich der Anschlag zumindest teilweise auf einer der zu arretierenden Komponente zuzuwendenden Seite des elastischen Elementes, d.h. der Anschlag ist im montierten Zustand der Arretiervorrichtung (etwa nach Montage an einem Überlagerungsantrieb) auf einer der zu arretierenden Komponente zugewandten Seite des elastischen Elementes angeordnet.

Denkbar ist, dass der Kontakt zwischen dem elastischen Element und dem Anschlag erst beim Bewegen des Arretierelementes in die Arretierposition erfolgt, d.h. dass sich das elastische Element in der Freigabeposition nicht in Kontakt mit dem Anschlag befindet, sondern erst in Folge der Bewegung des Arretierelementes in die Arretierposition gegen den Anschlag gedrückt wird. Es ist jedoch auch möglich, dass das elastische Element so festgelegt ist, dass ein Bereich des elastischen Elementes in Kontakt mit dem Anschlag gehalten wird. In diesem Fall besteht der Kontakt des elastischen Elementes mit dem Anschlag auch in der Freigabeposition des Arretierelementes. Beispiele für das Zusammenwirken zwischen dem elastischen Element und dem Anschlag werden weiter unten näher erläutert.

Gemäß einer Weiterbildung der Erfindung weist die Arretiervorrichtung einen ersten Anschlag auf, wobei das elastische Element so beschaffen und mit dem Arretierelement gekoppelt ist, dass es sich zumindest in der Freigabeposition des Arretierelementes in Kontakt mit dem ersten Anschlag befindet, und wobei der Anschlag, mit dem sich das elastische Element zumindest in der Arretierposition des Arretierelementes in Kontakt befindet, ein zweiter Anschlag der Arretiervorrichtung ist. Insbesondere wird das elastische Element bei einer Bewegung des Arretierelementes in die Freigabeposition gegen den ersten Anschlag gedrückt, wodurch es zu einer Komprimierung des elastischen Elementes und dem Ausbilden einer Rückstellkraft auf das Arretierelement kommt. Beispielsweise befindet sich der zweite Anschlag im montierten Zustand der Arretiervorrichtung näher an der zu arretierenden Komponente als der erste Anschlag. So ist der zweite Anschlag z.B. auf einer der zu arretierenden Komponente zugewandten Seite des elastischen Elementes angeordnet, während sich der erste Anschlag auf einer der zu arretierenden Komponente abgewandten Seite des elastischen Elementes befindet.

Beispielsweise ist ein Bereich des elastischen Elementes mit dem Arretierelement gekoppelt und ein anderer Bereich des elastischen Elementes befindet sich zumindest in der Arretierposition des Arretierelementes in Kontakt mit dem Anschlag. Möglich ist insbesondere, dass der in der Arretierposition des Arretierelementes in Kontakt mit dem Anschlag befindliche "andere Bereich" des elastischen Elementes einen größeren Durchmesser aufweist als der Bereich des elastischen Elementes, über den die Kopplung mit dem Arretierelement erfolgt. Insbesondere weist der "andere Bereich" des elastischen Elementes einen Durchmesser auf, der größer als der Außendurchmesser eines freien Endes des Arretierelementes ist. Denkbar ist hierbei, dass sich die beiden Bereiche des elastischen Elementes (z.B. radial) aneinander angrenzen und/oder sich zumindest teilweise in einer gemeinsamen (insbesondere senkrecht zur Achse des elastischen Elementes orientierten) Ebene erstrecken.

Gemäß einer Weiterbildung der Erfindung ist der mit dem Arretierelement gekoppelte Bereich des elastischen Elementes ein erster Bereich des elastischen Elementes, wobei das elastische Element darüber hinaus einen zweiten Bereich aufweist, der sich zumindest in der Freigabeposition des Arretierelementes in Kontakt mit dem oben erwähnten ersten Anschlag befindet, und wobei der "andere Bereich" des elastischen Elementes, der sich zumindest in der Arretierposition des Arretierelementes in Kontakt mit dem ebenfalls oben erwähnten zweiten Anschlag befindet, ein dritter Bereich des elastischen Elementes ist.

Die genannten Bereiche des elastischen Elementes grenzen insbesondere aneinander an (sind jedoch nicht identisch miteinander). Möglich ist zum Beispiel, dass sich der erste Bereich des elastischen Elementes - entlang der Längserstreckungsrichtung des elastischen Elementes betrachtet - vor dem zweiten Bereich des elastischen Elementes erstreckt, d.h. der erste Bereich befindet sich nach Montage der Arretiervorrichtung näher an der zu arretierenden Komponente als der zweite Bereich. Beispielsweise umfasst der zweite Bereich des elastischen Elementes ein der zu arretierenden Komponente abgewandtes Ende des elastischen Elementes. Der dritte Bereich des elastischen Elementes hingegen befindet sich in einem Bereich des elastischen Elementes, der der bewegbaren Komponente zugewandt ist; insbesondere bildet der dritte Bereich (z.B. zusammen mit dem ersten Bereich) ein der zu arretierenden Komponente zugewandtes Ende des elastischen Elementes aus. Möglich ist auch, dass der dritte Bereich des elastischen Elementes einen größeren Durchmesser aufweist als der erste Bereich. Beispielsweise umgibt der dritte Bereich des elastischen Elementes zumindest teilweise den ersten Bereich.

Gemäß einer anderen Ausgestaltung der Erfindung ist der oben erwähnte erste Anschlag durch ein von dem Arretierelement verschiedenes (insbesondere einstückiges) Trägerelement ausgebildet. Die erfindungsgemäße Arretiervorrichtung kann des Weiteren einen elektromagnetischen Aktuator zum Bewegen und/oder Halten des Arretierelementes umfassen. Denkbar ist, dass eine Spule des Aktuators an dem Trägerelement angeordnet ist, d.h. dass das Trägerelement als Spulenträger dient.

Das Trägerelement kann des Weiteren eine (zum Beispiel zentrale) Bohrung aufweisen, in der das Arretierelement zumindest teilweise angeordnet ist. Des Weiteren kann das Trägerelement in einem Gehäuse der Arretiervorrichtung angeordnet sein, wobei das Gehäuse zum Beispiel eine Aufnahme für das Trägerelement bildet. Darüber hinaus kann das Gehäuse ein Zentrierelement aufweisen, an dem das Trägerelement gelagert und zentriert ist. Des Weiteren kann das Gehäuse ein Führungselement umfassen, das an einer vorderen Seite des Gehäuses (zum Beispiel einstückig mit den übrigen Abschnitten des Gehäuses) ausgebildet ist und das zur Führung eines aus dem Trägerelement herausragenden Abschnitts (insbesondere eines freien Endes) des Arretierelementes dient. Denkbar ist zudem, dass der Anschlag durch einen Abschnitt (der z.B. der zu arretierenden Komponente abgewandt ist) des Führungselementes ausgebildet ist.

Des Weiteren kann das elastische Element dadurch mit dem Arretierelement gekoppelt sein, dass es an einem Abschnitt des Arretierelementes anliegt, der einen gegenüber den übrigen Abschnitten des Arretierelementes verminderten Durchmesser aufweist. Beispielsweise handelt es sich bei dem Abschnitt um eine Einbuchtung oder Aussparung (zum Beispiel um eine Nut), die sich zumindest über einen Teil des Umfanges des Arretierelementes erstreckt. Denkbar ist zum Beispiel, dass das elastische Element mit dem oben erwähnten ersten Bereich an diesem Abschnitt des Arretierelementes anliegt und somit an dem Arretierelement angekoppelt ist. Beispielsweise begrenzt mindestens eine Seitenwand der Einbuchtung ein Verrutschen des ersten Bereichs des elastischen Elementes längs des Arretierelementes.

Die beschriebenen Varianten der Kopplung zwischen dem elastischem Element und dem Arretierelement sind jedoch lediglich beispielhaft zu verstehen, andere Ausführungen für eine sichere Kraftübertragung sind ebenso möglich. So kann z.B. das Arretierelement einen Sicherungsring aufweisen, an dem sich das elastische abstützen kann. Oder es ist mit einem Gewinde versehen, auf das das elastischer Element partiell auf geschraubt wird.

Gemäß einer weiteren Variante der Erfindung weist die Arretiervorrichtung neben dem oben erwähnten ersten und zweiten Anschlag einen dritten Anschlag auf, wobei das Arretierelement auch relativ zu dem dritten Anschlag bewegbar ist, und wobei das elastische Element so beschaffen und mit dem Arretierelement gekoppelt ist, dass es bei einer Bewegung des Arretierelementes in die Freigabeposition in Kontakt mit dem dritten Anschlag kommt. Der Kontakt des elastischen Elementes mit dem dritten Anschlag führt insbesondere zu einer Dämpfung auch der Bewegung des Arretierelementes in die Freigabeposition und wirkt damit einer Geräuschentwicklung bei einer derartigen Bewegung des Arretierelementes entgegen.

Denkbar ist darüber hinaus, dass das elastische Element relativ zu dem Anschlag so festgelegt ist (z.B. mit dem Anschlag verbunden ist) und zumindest teilweise als Zugelement ausgebildet ist, dass es bei einer Bewegung des Arretierelementes in die Freigabeposition zumindest teilweise gespannt wird. Bei einem Lösen des Arretierelementes wird es sich somit unter Einwirkung des sich entspannenden als Zugelement ausgebildeten Bereichs (bei dem es sich z.B. um den oben erwähnten dritten Bereich handelt) des elastischen Elements in die Arretierposition bewegen. Insbesondere bildet ein anderer Bereich (z.B. der oben erwähnte zweite Bereich) des elastischen Elementes ein Druckelement aus, das bei Bewegen des Arretierelementes in die Freigabeposition komprimiert wird. Ein Bewegen des Arretierelementes in die Arretierposition kann somit unter Einwirken des sich entspannenden Zug- und Druckelementes erfolgen.

Gemäß einer weiteren Variante der Erfindung handelt es sich bei dem elastischen Element um eine Schraubenfeder, wobei das (z.B. in Form eines Bolzens ausgebildete) Arretierelement z.B. zumindest teilweise in der Schraubenfeder angeordnet ist, so dass sich Windungen der Schraubenfeder (zum Beispiel konzentrisch) um das Arretierelement herum erstrecken. Es wird jedoch darauf hingewiesen, dass die Erfindung nicht auf die Verwendung einer Schraubenfeder als elastisches Element beschränkt ist. Vielmehr könnte z.B. auch ein (etwa zumindest abschnittsweise hohlzylindrisches) hülsenartiges (d.h. durchgehendes) elastisches Element verwendet werden. Beispielsweise ist ein derartige elastisches Element aus einem elastischen Material, etwa einem elastischen Kunststoff, ausgebildet.

Der erste Bereich (s.o.) der Schraubenfeder weist insbesondere mehrere Windungen auf, deren Abstand zueinander auch im entspannten Zustand der Schraubenfeder geringer ist als der Abstand zwischen Windungen des zweiten Bereichs der Schraubenfeder. Beispielsweise können die Windungen des ersten Bereiches der Schraubenfeder in deren entspanntem Zustand aneinander anliegen. Der geringere Abstand der Windungen des ersten Bereiches der Schraubenfeder erlaubt insbesondere eine möglichst sichere Kopplung der Schraubenfeder mit dem Arretierelement, wie oben bereits beschrieben. Denkbar ist darüber hinaus, dass der dritte Bereich der Schraubenfeder mehrere Windungen aufweist, wobei sich die Windungen zumindest näherungsweise in einer gemeinsamen (insbesondere senkrecht zur Achse des elastischen Elementes verlaufenden) Ebene erstrecken. Der dritte Bereich weist z.B. zudem, wie oben bereits angedeutet, einen größeren Durchmesser als die übrigen Abschnitte der Schraubenfeder (zumindest als deren erster Bereich) auf, wodurch der Kontakt mit dem Anschlag der Arretiervorrichtung ermöglicht wird. Denkbar ist auch, dass sich der dritte Bereich zumindest teilweise mit dem ersten Bereich in einer gemeinsamen Ebene erstreckt. Auch ist es möglich, dass der erste Bereich der Schraubenfeder lediglich eine einzige Windung aufweist.

In einem weiteren Aspekt betrifft die Erfindung eine Arretiervorrichtung, insbesondere wie oben beschrieben, zum Arretieren einer bewegbaren Komponente, mit
- einem zwischen einer Arretier- und Freigabeposition hin- und herbewegbaren Arretierelement, das in der Arretierposition mit der bewegbaren Komponente zusammenwirkt; und
- einem elastischen Element zum Bewegen des Arretierelementes, wobei das elastische Element einen mit dem Arretierelement gekoppelten Bereich aufweist, wobei
- ein anderer Bereich des elastischen Elements an einem gegenüber einer Bewegung des Arretierelementes ortsfesten Teil der Arretiervorrichtung derart festgelegt ist, dass das elastische Element bei einer Bewegung des Arretierelements in die Arretier- und/oder Freigabeposition zumindest teilweise auseinandergezogen und gespannt wird.

Bei dem mit dem Arretierelement gekoppelten Bereich des Arretierelementes handelt es sich z.B. um den oben erwähnten ersten Bereich des elastischen Elementes. Das gegenüber einer Bewegung des Arretierelementes "ortsfeste" Teil der Arretiervorrichtung ist insbesondere ein Teil oder ein Abschnitt der Arretiervorrichtung, der sich nicht mit dem Arretierelement mitbewegt. Der "andere Bereich" des elastischen Elementes, der wie eine Zugfeder durch Auseinanderziehen spannbar ist, kann durch den ebenfalls oben erwähnten dritten Bereich des elastischen Elementes ausgebildet sein. Insbesondere ist der "andere Bereich" des elastischen Elementes so festgelegt (z.B. in einem vorderen Bereich der Arretiervorrichtung), dass es sich zumindest im Wesentlichen nur bei einer Bewegung des Arretierelementes in die Freigabeposition dehnt und spannt. Denkbar ist auch, dass das elastischen Element an mehreren voneinander beabstandeten Abschnitten mindestens eines ortsfesten Teiles der Arretiervorrichtung festgelegt ist, wobei es z.B. bei einer Bewegung in die Freigabeposition teilweise auseinandergezogen und dadurch gespannt wird und bei einer Bewegung in den Arretierposition teilweise komprimiert und dadurch teilweise vorgespannt wird (oder umgekehrt); d.h. das elastische Element realisiert sowohl ein Zug- als auch ein Druckelement wie oben in Zusammenhang mit dem ersten Erfindungsaspekt bereits beschrieben.

Denkbar ist zudem, dass der "andere Bereich" des elastischen Elementes an dem oben erwähnten Gehäuse und/oder dem ebenfalls erwähnten Trägerelement festgelegt ist. Möglich ist insbesondere, dass das Festlegen des "anderen Bereichs" des elastischen Elementes so erfolgt, dass er in Kontakt mit dem oben diskutierten (zweiten) Anschlag der Arretiervorrichtung, der eine Bewegung des Arretierelementes in die Arretierposition begrenzt, gehalten wird oder mit dem Anschlag (insbesondere fest) verbunden ist. Dies ist jedoch nicht zwingend. Denkbar ist vielmehr auch, dass der "andere Bereich" des elastischen Elementes an einem Abschnitt der Arretiervorrichtung festgelegt ist, der von dem Anschlag beabstandet ist, so dass sich das elastische Element z.B. in der Freigabeposition des Arretierelementes nicht in Kontakt mit dem Anschlag befindet. Denkbar ist auch, dass kein Anschlag vorhanden ist, der die Bewegung des Arretierelementes begrenzt, sondern die Begrenzung dieser Bewegung durch die Verbindung des elastischen Elementes mit dem ortsfesten Teil der Arretiervorrichtung erfolgt. Das Festlegen des "andere Bereich" des elastischen Elementes an dem ortsfesten Teil der Arretiervorrichtung erfolgt z.B. über eine klemmende Verbindung.

Die Erfindung betrifft auch einen Überlagerungsantrieb für eine Überlagerungslenkung eines Kraftfahrzeuges mit einer wie oben beschriebenen Arretiervorrichtung.

Die Erfindung wird im Folgenden anhand von Ausführungsbeispielen unter Bezugnahme auf die Figuren näher erläutert. Es zeigen:
- Figur 1: eine Schnittansicht eines in ein Lenkrad eines Kraftfahrzeuges integrierten Überlagerungsantriebs;
- Figur 2: eine Schnittansicht einer Arretiervorrichtung gemäß einem ersten Ausführungsbeispiel der Erfindung;
- Figur 3: eine Schnittansicht der Arretiervorrichtung aus Figur 2 in Arretierposition;
- Figur 4: eine perspektivische Ansicht eines Arretierbolzens einer erfindungsgemäßen Arretiervorrichtung;
- Figur 5A: ein elastisches Element in Form einer Schraubenfeder einer erfindungsgemäßen Arretiervorrichtung;
- Figur 5B: eine Ansicht von vorne der Schraubenfeder aus Figur 5A;
- Figur 5C: eine vergrößerte Darstellung eines ersten Bereichs der Schraubenfeder aus Figur 5A;
- Figur 5D: einen zweiten Bereich der Schraubenfeder aus Figur 5A;
- Figur 6: eine Schnittansicht einer Arretiervorrichtung gemäß einem zweiten Ausführungsbeispiel der Erfindung;
- Figur 7: eine Schnittansicht der Arretiervorrichtung aus Figur 6 in Freigabeposition;
- Figur 8: eine Schnittansicht einer Arretiervorrichtung gemäß einem dritten Ausführungsbeispiel der Erfindung;
- Figur 9: eine Schnittansicht der Arretiervorrichtung aus Figur 8 in Arretierposition;
- Figur 10: die Anordnung aus dem Arretierbolzen und der Schraubenfeder der Arretiervorrichtung der Figur 9;
- Figur 11: eine Variante der Schraubenfeder der Arretiervorrichtung aus Figur 9;
- Figur 12: eine Möglichkeit der Fixierung der Schraubenfeder aus Figur 11.

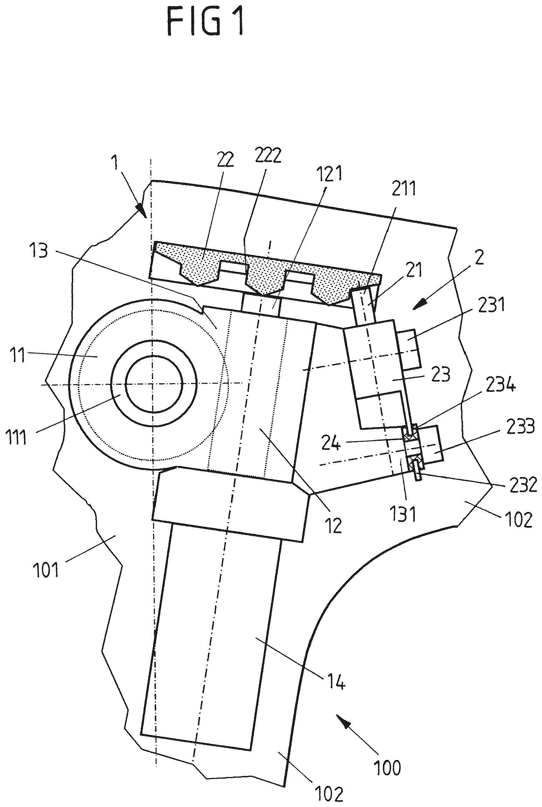

Figur 1 zeigt einen an einer zentralen Nabe 101 eines Lenkrades 100 eines Kraftfahrzeuges angeordneten Überlagerungsantrieb 1. Die Lenkradnabe 101 ist über Speichen 102 (vorliegend drei) mit einem nicht dargestellten Lenkradkranz verbunden, über den ein Fahrer das Lenkrad 100 drehen und somit einer mit dem Lenkrad 100 verbundenen Lenkwelle einen Lenkwinkel aufprägen kann. Mittels des Überlagerungsantriebes 1 kann der Lenkwelle ein zusätzlicher Lenkwinkel aufgeprägt werden, der dem durch Drehen des Lenkradkranzes in die Lenkwelle eingeleiteten Lenkwinkel überlagert wird.

Der Überlagerungsantrieb 1 ist insbesondere an einer dem Fahrer abgewandten Seite des Lenkrades 100 angeordnet und weist eine mit einem Schneckenrad 11 kämmende Antriebsschnecke 12 auf. Das Schneckenrad 11 ist über einen Fortsatz 111, der aus einem Gehäuse 13 des Überlagerungsantriebes 1 herausragt, mit der Lenkwelle des Kraftfahrzeugs gekoppelt, so dass eine Drehbewegung des Schneckenrades 11 auf die Lenkwelle übertragen wird. Der Antrieb der Antriebsschnecke 12 erfolgt über einen Aktuator 14, der insbesondere in Form eines Elektromotors ausgebildet ist. Eine mögliche Ausgestaltung des Überlagerungsantriebes 1 sowie dessen Befestigung am Lenkrad 100 und mit der Lenkwelle sind z. B. in der internationalen Patentanmeldung PCT/EP2010/053775 (veröffentlicht als WO 2010/11 57 07 A1) beschrieben.

Am Lenkrad 100 ist des Weiteren eine zu dem Überlagerungsantrieb 1 separate Arretiervorrichtung 2 angeordnet, die dazu dient, den Überlagerungsantrieb 1 durch mechanische Einwirkung zu arretieren; beispielsweise, um bei einer Fehlfunktion des Überlagerungsantriebes 1 ein Einleiten eines Lenkwinkels in die Lenkwelle durch den Überlagerungsantrieb 1 zu verhindern.

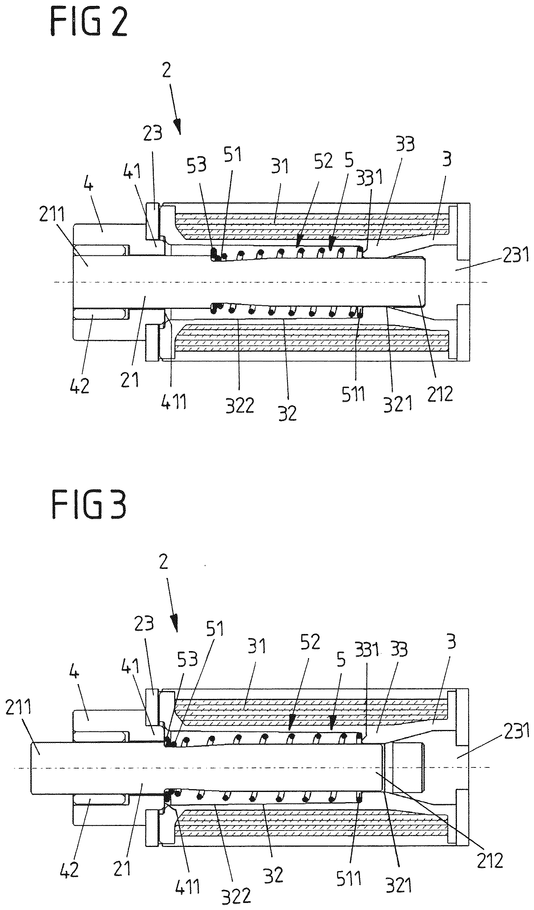

Die Arretiervorrichtung 2 weist ein Arretierelement in Form eines Arretierbolzens 21 auf, der über einen (z.B. elektromagnetischen) Aktuator axial aus einer Freigabeposition (siehe Fig. 2) in eine in Figur 1 dargestellte Arretierposition bewegbar ist. Dies geschieht z.B. durch eine Unterbrechung (Deaktivierung) der Stromzufuhr (Bestromung) zu einem Elektromagneten des Aktuators und den damit verbundenen Wegfall einer auf den Arretierbolzen 21 ausgeübten Haltekraft. Nach Wegfall der Haltekraft bewegt sich der Arretierbolzen 21 unter der Wirkung eines in einem Gehäuse 23 untergebrachten Federelementes (in Fig. 1 nicht dargestellt) in die Arretierposition. Um den Arretierbolzen 21 aus der Arretierposition wieder in die Freigabeposition zu bewegen, wird der Elektromagnet des Aktuators aktiviert (bestromt), wodurch der Arretierbolzen 21 unter Verspannung des Federelementes in die Freigabeposition gebracht und dort gehalten wird. Grundsätzlich ist es auch umgekehrt möglich, dass der Arretierbolzen 21 bei Bestromung des Elektromagnets des Aktutators in die Arretierposition und bei Wegfall der Bestromung in die Freigabeposition bewegt wird.

Der Arretierbolzen 21 wirkt in seiner Arretierposition mit einer bewegbaren (hier rotierbaren) Komponente in Form einer Arretierscheibe 22 zusammen, wobei die Arretierscheibe 22 drehfest mit einem aus dem Gehäuse 13 des Überlagerungsantriebes 1 herausragenden freien Ende 121 der Antriebsschnecke 12 gekoppelt ist. Die Arretierscheibe 22 weist entlang ihres äußeren Umfanges Aussparungen 222 auf, in die ein aus dem Gehäuse 23 der Arretiervorrichtung 2 herausgreifendes freies Ende 211 des Arretierbolzens 21 in Arretierposition eingreift und die Arretierscheibe 22 vorwiegend formschlüssig verriegelt. Durch die Verriegelung der Arretierscheibe 22 ist auch die mit ihr gekoppelte Antriebsschnecke 12 blockiert.

Der Aktuator der Arretiervorrichtung 2 und der Arretierbolzen 21 befinden sich im Innern des Gehäuses 23, wobei der Arretierbolzen 21 mit dem freien Ende 211 aus einer Öffnung des Gehäuses 23 hinausragt. Das Gehäuse 23 ist mittels geeigneter Befestigungselemente (beispielsweise in Form von Schrauben 231) an einem flanschartigen Anlageabschnitt des Gehäuses 13 des Überlagerungsantriebes 1 befestigt. Darüber hinaus weist das Gehäuse 23 an einer der Arretierscheibe 22 abgewandten Seite einen Abschnitt in Form einer (insbesondere im Wesentlichen ebenen) Lasche 232 (angeformt oder als separates Teil ausgebildet) auf. Im montierten Zustand des Überlagerungsantriebes 1 ragt eine Schraube 233 durch eine Durchgangsbohrung 234 der Lasche 232 hindurch und ist mit einem domartigen Verbindungsabschnitt 131 des Gehäuses 13 des Überlagerungsantriebes 1 verbunden. Über Lagerungsmittel in Form elastischer Elemente 24 stützt sich das Gehäuse 23 der Arretiervorrichtung 2 am Gehäuse 13 des Überlagerungsantriebes 1 ab und ermöglicht so eine Ausgleichsbewegung der Arretiervorrichtung 2 (insbesondere gegenüber dem Gehäuse 13) bei deren Betrieb. Hinsichtlich möglicher Ausführungen der elastischen Lagerung der Arretiervorrichtung 2 wird auf die internationale Patentanmeldung PCT/EP2012/054001 (veröffentlicht als WO 2012/120079 A1) verwiesen.

Figur 2 zeigt eine Schnittdarstellung eines ersten Ausführungsbeispiels der erfindungsgemäßen Arretiervorrichtung 2 in Freigabeposition, wobei aus Übersichtlichkeitsgründen weitestgehend auf eine Schraffur verzichtet wurde. Der grundsätzliche Aufbau und die Funktion der Arretiervorrichtung 2 wurden bereits oben in Zusammenhang mit Figur 1 erläutert. Es wird allerdings darauf hingewiesen, dass die erfindungsgemäße Arretiervorrichtung nicht ausschließlich zum Blockieren einer Arretierscheibe, d.h. einer rotierbaren Komponente, verwendbar ist. Vielmehr kann die Arretiervorrichtung auch zum Arretieren anderer bewegbarer Komponenten eingesetzt werden; z.B. zum Blockieren linear beweglicher Komponenten.

Im Inneren des in Figur 2 teilweise dargestellten Gehäuses 23 der Arretiervorrichtung 2 befindet sich der Aktuator zum Bewegen des Arretierbolzens 21. Der Aktuator umfasst insbesondere einen Elektromagneten, wobei eine Spule 31 des Elektromagneten an einem Trägerelement in Form eines (insbesondere rotationssymmetrischen) Spulenträgers 3 angeordnet (z.B. aufgewickelt) ist. In einem hinteren Abschnitt, d.h. einem der zu arretierenden bewegbaren Komponente - z.B. in Form der in Figur 1 gezeigten (in Fig. 2 jedoch nicht dargestellten) Arretierscheibe - und damit dem freien Ende 211 des Arretierbolzens 21 abgewandten Abschnitt, ist das (z.B. einstückig ausgebildete) Gehäuse 23 mit einem kegelförmigen Zentrierelement 231 zur Zentrierung des Spulenträgers 3 versehen.

In einem vorderen (d.h. der zu arretierenden bewegbaren Komponente zugewandten) Abschnitt des Gehäuses 23 ist der Spulenträger 3 an einem Absatz 41 eines Führungselementes 4 zentriert, welches einen vorderen Abschluss des Gehäuses 23 bildet. Das Führungselement 4 weist zudem an einem der zu arretierenden bewegbaren Komponente zuzuwendenden Ende ein buchsenförmiges Element 42 zur Führung des Arretierbolzens 21 (insbesondere des freien Endes 211) auf. Möglich ist, dass das Gehäuse 23 das Zentrierelement 231 und das Führungselement 4 einstückig ausformt. Dies ist jedoch nicht zwingend, sondern das Zentrierelement 231 und/oder das Führungselement 4 kann auch über Befestigungsmittel mit einem anderen Abschnitt des Gehäuses 23 verbunden sein.

Entlang seiner Haupterstreckungsrichtung ist der Spulenträger 3 mit einer zur Längsachse konzentrischen (insbesondere zumindest abschnittsweise zylindrischen) durchgehenden Bohrung 32 versehen. Die Bohrung 32 weist an einem dem Zentrierelement 231 zugewandten Abschnitt (Führungsabschnitt 321) einen im Vergleich zu ihren übrigen Abschnitten geringeren Innendurchmesser auf. Der Führungsabschnitt 321 dient der Führung des Arretierbolzens 21, insbesondere seines hinteren (dem freien Ende 211 abgewandten) Endes 212. Ein angrenzender, sich vor dem Führungsabschnitt 321 (d.h. näher an dem Führungselement 4 befindlichen) erstreckender Abschnitt 322 der Bohrung 32 ist mit einem größeren Innendurchmesser versehen. Der durch den Abschnitt 322 ausgebildete Raum wird zentral von dem Arretierbolzen 21 durchlaufen, wobei in dem Abschnitt 322 zudem ein elastisches Element in Form einer Schraubenfeder 5 (hier in Form einer Druckfeder) angeordnet ist, die den Arretierbolzen 21 (insbesondere konzentrisch) umgibt. Der Außendurchmesser der Schraubenfeder 5 ist derart bemessen, dass sie ohne Kontakt zum Spulenträger 3 axial bewegt (gelängt/gespannt und/oder verkürzt/komprimiert) werden kann.

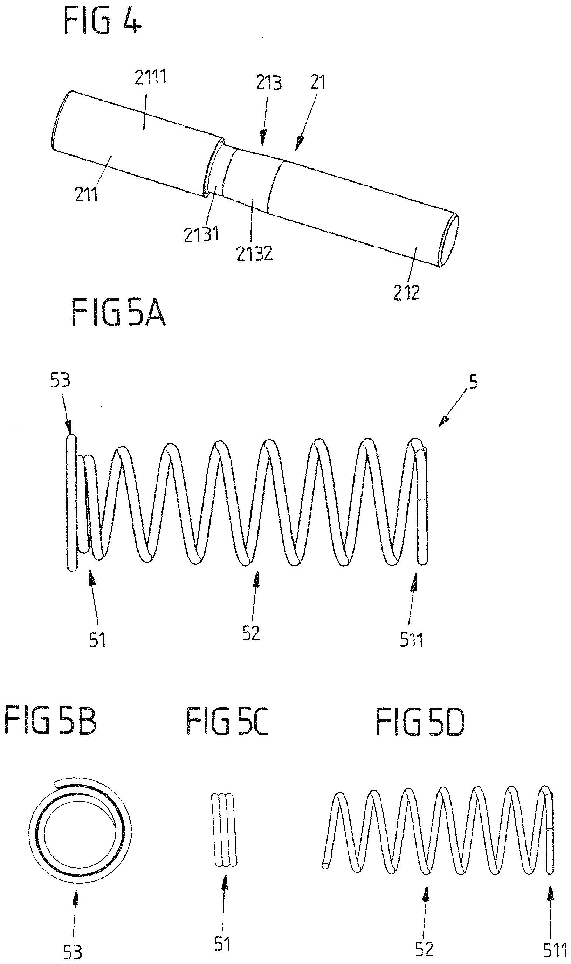

Die Schraubenfeder 5 weist in einem vorderen Abschnitt einen ersten Bereich 51 auf, über den sie mit dem Arretierbolzen 21 gekoppelt ist. Die Kopplung ist insbesondere dadurch realisiert, dass der erste Bereich 51 der Schraubenfeder 5 in einen Bereich (Nut 213) des Arretierbolzens 21 mit reduziertem Außendurchmesser eingreift (den Arretierbolzen 21 insbesondere umschlingt). Mittels dieser Kopplung kann eine Kraftübertragung zwischen dem Arretierbolzen 21 und der Schraubenfeder 5 erfolgen (siehe auch Fig. 5A bis 5D). Insbesondere wird die Schraubenfeder 5 aufgrund der Kopplung ihres ersten Bereichs 51 mit dem Arretierbolzen 21 bei einer Bewegung des Arretierbolzens 21 in die Freigabeposition komprimiert (d.h. vorgespannt).

Die Schraubenfeder 5 weist des Weiteren einen zweiten Bereich 52 auf, der sich von dem ersten Bereich 51 bis zu einem hinteren Ende 511 der Schraubenfeder 5 erstreckt. Der Spulenträger 3 formt einen den Führungsabschnitt 321 der Bohrung 32 begrenzenden (radial nach innen weisenden) Absatz 33 aus, wobei eine nach vorne (auf das Führungselement 4 zu) orientierte (und z.B. zumindest näherungsweise senkrecht zur Achse des Arretierbolzens 21 verlaufende) Stirnseite des Absatzes 33 einen ersten Anschlag 331 (Festanschlag) ausbildet, an dem sich der zweite Bereich 52 der Schraubenfeder 5 (mit dem hinteren Ende 511) abstützt. Denkbar ist auch, dass das Ende 511 der Schraubenfeder 5 (z.B. formschlüssig) mit dem ersten Anschlag 331 (bzw. mit dem Absatz 33) verbunden ist.

Der Arretierbolzen 21 kann zudem einen Abschnitt aufweisen, der konisch verläuft (der Durchmesser dieses Abschnitts nimmt nach hinten zu), um die Führung der Schraubenfeder 5 zu verbessern, wobei der zweite Bereich 52 der Schraubenfeder 5 an diese Form des Arretierbolzens angepasst zumindest teilweise ebenfalls konisch gestaltet ist. Die konische Ausgestaltung des Arretierbolzens 21 und/oder der Schraubenfeder 5 ist jedoch nicht zwingend.

An den ersten Bereich 51 der Schraubenfeder 5 grenzt ein dritter Bereich 53 an, der sich von dem ersten Bereich 51 zumindest teilweise radial nach außen erstreckt. Entsprechend weist der dritte Bereich 53 zumindest teilweise einen größeren Durchmesser als der erste Bereich 51 auf, wobei der Durchmesser des dritten Bereichs 53 insbesondere auch größer ist als der Außendurchmesser des Arretierbolzens 21 (zumindest des freien Endes 211 des Arretierbolzens 21). Denkbar ist, dass der erste Bereich 51 und/oder der dritte Bereich 53 der Schraubenfeder 5 ein vorderes Ende der Schraubenfeder 5 ausbilden, wobei der dritte Bereich 53 den ersten Bereich 51 zumindest teilweise umgibt. Möglich ist allerdings auch, dass sich der dritte Bereich 53 zumindest teilweise vor dem ersten Bereich 51 erstreckt.

Der Arretierbolzen 21 wird in der in Figur 2 gezeigten Freigabeposition durch eine durch die Bestromung der Spule 31 des Elektromagneten hervorgerufene Kraft gegen die Rückstellkraft der Schraubenfeder 5 gehalten. Die Feder 5 wird bei der Bewegung (z.B. ebenfalls durch den Elektromagneten bewirkt) des Arretierbolzens 21 in die Freigabeposition vorgespannt und eine vorgebare Rückstellkraft aufgebaut.

Wird die Bestromung der Spule 31 unterbrochen, entfällt die Haltekraft und die Rückstellkraft der Schraubenfeder 5 drückt den Arretierbolzen 21 in die in Figur 3 gezeigte Arretierposition. Bei dieser Bewegung kommt der dritte Bereich 53 der Schraubenfeder 5 in Kontakt mit einer (z.B. zumindest näherungsweise senkrecht zur Achse des Arretierbolzens 21 verlaufende) Stirnfläche des Führungselementes 4 (insbesondere des Absatzes 41), wobei die Stirnfläche einen zweiten Anschlag 411 der Arretiervorrichtung 2 bildet.

Der dritte Bereich 53 der Schraubenfeder 5 stützt sich also bei der Bewegung des Arretierbolzens 21 in die Arretierposition an dem zweiten Anschlag 411 ab, wodurch aufgrund der Kopplung der Schraubenfeder 5 mit dem Arretierbolzen 21 die Bewegung des Arretierbolzens 21 in die Arretierposition, d.h. auf die zu arretierende Komponente (auch in Figur 3 nicht dargestellt) zu, begrenzt wird. Aufgrund der Elastizität des dritten Bereichs 53 der Schraubenfeder 5 (und der übrigen Bereiche der Schraubenfeder 5) erfolgt ein elastisches Abbremsen des Arretierbolzens 21, wodurch eine Geräuschentwicklung durch diese Bewegung des Arretierbolzens 21 (etwa bei einem Auftreffen des Arretierbolzens 21 auf die zu arretierende Komponente) wirksam vermindert wird. Die Elastizität des dritten Bereichs 53 der Schraubenfeder 5 wird insbesondere dadurch bewirkt, dass sich die Windungen des dritten Bereichs 53 (wie die Windungen der übrigen Bereiche der Schraubenfeder 5) relativ zueinander bewegen können.

Figur 4 zeigt eine mögliche Ausführung des Arretierbolzens 21 der erfindungsgemäßen Arretiervorrichtung. Der Arretierbolzen 21 weist danach einen mit einer umlaufenden Nut 213 versehenen Bereich (d.h. einen Bereich mit reduziertem Außendurchmesser) auf, der zumindest teilweise zur Aufnahme des ersten Bereichs 51 der Schraubenfeder dient (vgl. Fig. 2 oder 3). Der Arretierbolzen 21 besitzt im Bereich der Nut 213 einen ersten, zumindest näherungsweise zylindrisch ausgebildeten Abschnitt 2131 und einen zweiten, sich ausgehend von dem ersten Abschnitt 2131 auf das hintere Ende 212 zu kegelförmig erweiternden Abschnitt 2132. Im montierten Zustand der Arretiervorrichtung dient insbesondere der zylindrische erste Abschnitt 2131 zur Aufnahme des ersten Bereiches 51 der Schraubenfeder 5, wobei sein Außendurchmesser z.B. derart bemessen ist, dass die Windungen des ersten Bereiches 51 fest an dem ersten Abschnitt 2131 des Arretierbolzens 21 anliegen (insbesondere klemmend an diesem befestigt sind). Der kegelförmige Abschnitt 2132 ist insbesondere dem Verlauf des zweiten Bereiches 52 der Schraubenfeder 5 angepasst. In Abhängigkeit von dem Verlauf des zweiten Bereiches 52 kann der kegelförmige Abschnitt 2132 auch entfallen. Beispielsweise schließt sich dann dem zylindrischen Abschnitt 2131 (in Fig. 4 rechts) unmittelbar ein weiterer zylindrischer Bereich mit größeren Durchmesser an, so dass sich zwischen dem zylindrischen Abschnitt 2131 der Nut 213 und dem weiteren zylindrischen Bereich eine Stufe befindet.

Von dem zylindrischen Abschnitt 2131 bis zu dem freien Ende 211 des Arretierbolzens 21 erstreckt sich ein vorderer zylindrischer Abschnitt 2111, der einen größeren Durchmesser aufweist als der zylindrische Abschnitt 2131 der Nut 213. Entsprechend befindet sich zwischen dem zylindrischen Abschnitt 2131 und dem vorderen Abschnitt 2111 eine Stufe, die zur Fixierung des ersten Bereichs 51 der Schraubenfeder 5 beitragen kann. Die Nut 213 weist z.B. einen zumindest näherungsweise U-förmigen Querschnitt (Boden und zwei z.B. senkrecht zum Boden orientierte Seitenwände) auf.

Während Figur 5A eine mögliche Ausführung der (entspannten) Schraubenfeder 5 der erfindungsgemäßen Arretiervorrichtung in einer vollständigen Seitenansicht zeigt, sind in den Figuren 5B - 5D die drei Bereiche 51 - 53 der Schraubenfeder 5 zur Verdeutlichung separat dargestellt (die Bereiche 51 - 53 sind allerdings einstückig miteinander verbunden). Die Figur 5B stellt den dritten Bereich 53 in einer Draufsicht auf die Stirnseite der Schraubenfeder 5 dar, d.h. von dem Führungselement 4 der Arretiervorrichtung betrachtet; vgl. Fig. 2 oder 3.

Die Figuren 5C und 5D zeigen den ersten bzw. den zweiten Bereich 51, 52 der Schraubenfeder 5 in einer Seitenansicht. Es ist zu erkennen, dass der Durchmesser der Windungen des ersten Bereichs 51 kleiner ist als der Durchmesser der Windungen des dritten Bereichs 53 und der Windungen des zweiten Bereichs 52 (zumindest ab einem gewissen Abstand zu dem ersten Bereich 51). Des Weiteren sind die Abstände zwischen den Windungen des ersten Bereichs 51 geringer als die Abstände der Windungen des zweiten Bereichs 52; insbesondere liegen die (vorliegend drei) Windungen des ersten Bereichs 51 bereits im entspannten Zustand der Feder 5 aneinander an. Der Durchmesser der Windungen des zweiten Bereichs 52 steigt von dem ersten Bereich 51 bis zu dem Ende 511 der Schraubenfeder 5 an, so dass der zweite Bereich 52 eine konische Form besitzt.

Es wird angemerkt, dass die Anzahl und der Verlauf der Windungen der drei Bereiche 51 - 53 lediglich beispielhaft zu verstehen sind. So kann der erste Bereich 51 auch nur aus einer Windung bestehen oder der zweite Bereich 52 abweichend von der Darstellung in Fig. 5A und 5D einen im Wesentlichen zylindrischen Verlauf aufweisen.

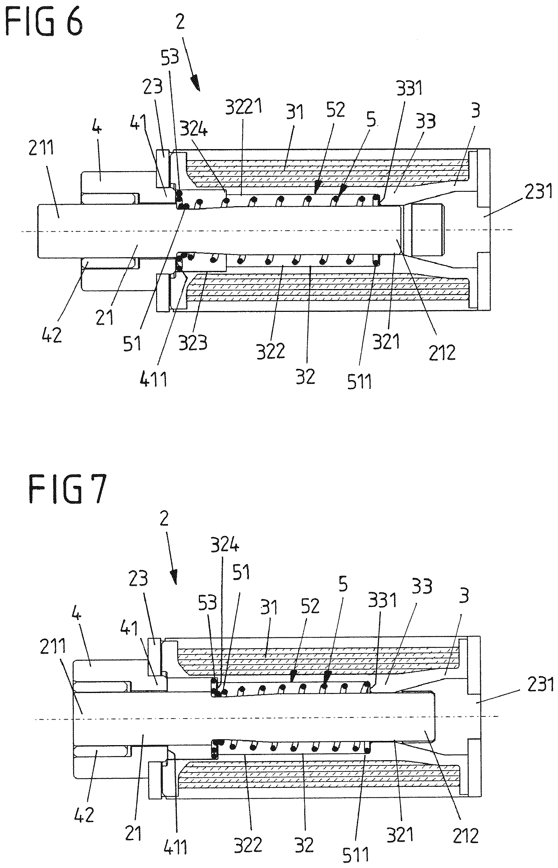

Figur 6 betrifft ein zweites Ausführungsbeispiel der erfindungsgemäßen Arretiervorrichtung 2, wobei Fig. 6 den Arretierbolzen 21 in der Arretierposition zeigt. Entsprechend steht der dritte Bereich 53 der Schraubenfeder 5 in Kontakt mit dem zweiten Anschlag 411.

Abweichend von dem ersten Ausführungsbeispiel ist die durchgehende Bohrung 32 des Spulenträgers 3 dreifach abgestuft, d.h. die Bohrung 32 weist drei (im Wesentlichen hohlzylindrische) Abschnitte 321 - 323 mit unterschiedlichen Innendurchmessern auf. Ausgehend von dem Abschnitt 321 mit dem kleinsten Innendurchmesser vergrößert sich der Innendurchmesser der Bohrung 32 entsprechend stufenweise bis zu dem Abschnitt 323 mit dem größten Innendurchmesser. Des Weiteren ist der Außendurchmesser des dritten Bereichs 53 der Schraubenfeder 5 größer als im ersten Ausführungsbeispiel.

Im Übergang zwischen dem vorderen Abschnitt 323 und dem mittleren Abschnitt 322 der Bohrung 32 bildet eine Stirnseite einer dort durch den Spulenträger 3 ausgeformten Stufe 3221 einen dritten Anschlag (Festanschlag) 324 aus. An dem dritten Anschlag 324 wird der dritte Bereich 53 der Schraubenfeder 5 bei einer Bewegung des Arretierbolzens 21 in die Freigabeposition zur Anlage kommen.

Dies ist in Figur 7 dargestellt, wonach der Arretierbolzen 21 aus der Arretierstellung (Fig. 6) (nach rechts) in die Freigabestellung bewegt wurde. Diese Bewegung des Arretierbolzens 21 wird wie oben bereits beschrieben durch eine Bestromung der Spule des Elektromagneten des Aktuators der Arretiervorrichtung 2 eingeleitet, wobei der Arretierbolzen 21 soweit gegen die Kraft der als Druckfeder ausgebildeten Schraubenfeder 5 zurückgezogen wird, bis deren dritter Bereich 53 (mit einer dem zweiten Anschlag 411 abgewandten Seite) zur Anlage an dem dritten Anschlag 324 kommt. Somit begrenzt der dritte Anschlag 324 in Zusammenwirkung mit dem dritten Bereich 53 der Schraubenfeder 5 die Bewegung des Arretierbolzens 21 in dessen Freigabeposition und dämpft auch hierbei die Geräuschentwicklung. Gleichzeitig erfolgt über den dritten Bereich 53 der Feder 5 auch eine Begrenzung der Bewegung des Arretierbolzens 21 in die Arretierposition, wie oben ausgeführt.

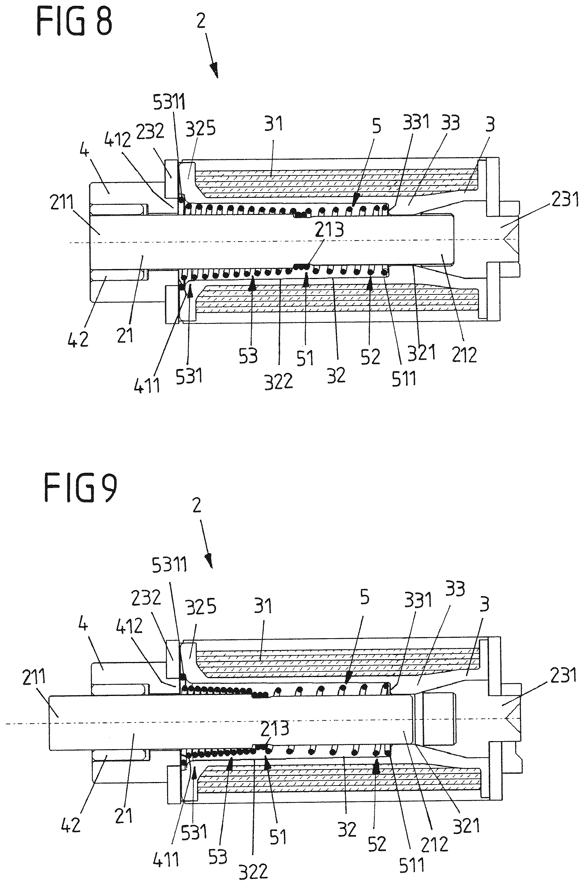

Figur 8 bezieht sich auf ein drittes Ausführungsbeispiel der erfindungsgemäßen Arretiervorrichtung mit dem Arretierbolzen 21 in der Freigabeposition. Abweichend von den beiden zuvor beschriebenen Ausführungsbeispielen erstreckt sich der dritte Bereich 53 der Schraubenfeder 5 (ebenso wie der zweite Bereich 52) im Wesentlichen entlang der Längsachse des Arretierbolzens 21 und zwar zumindest im Wesentlichen vor dem ersten Bereich 51, d.h. zwischen dem ersten Bereich 51 und dem Führungselement 4 der Arretiervorrichtung 2.

Darüber hinaus steht der dritte Bereich 53 der Schraubenfeder 5 bereits in der Freigabeposition in Kontakt mit dem zweiten Anschlag 411 der Arretiervorrichtung 2. Genauer ist der dritte Bereich 53 der Schraubenfeder 5 als Zugfeder ausgebildet, wobei ein dem Anschlag 411 zugewandtes Ende 531 fest mit dem zweiten Anschlag 411 verbunden ist. Durch diese Verbindung wirkt bei einer Bewegung des Arretierbolzens 21 in die Freigabeposition eine Zugkraft auf den dritten Bereich 53 der Schraubenfeder 5. Umgekehrt erfährt der Arretierbolzen 21 eine Zugkraft durch den gespannten dritten Bereich 53.

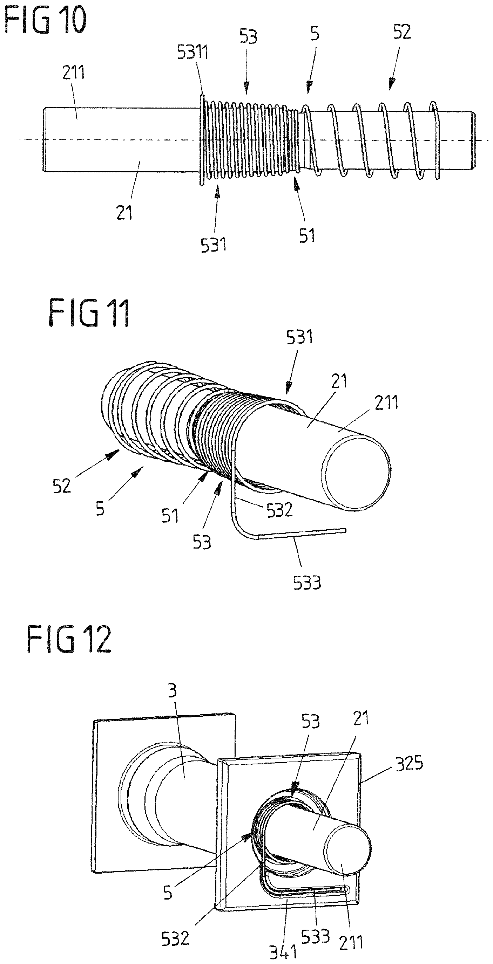

Zur Verbindung des dritten Bereiches 53 der Schraubenfeder 5 mit dem zweiten Anschlag 411 wird seine letzte Windung 5311 mit einem größeren Durchmesser versehen (siehe auch das Beispiel in Figur 10) und die Windung 5311 zwischen einem zum Führungselement 4 weisenden flanschartigen Abschlussabschnitt 325 des Spulenträgers 3 und einem Abschnitt 232 des Gehäuses 23 und/oder einem Abschnitt 412 untergebracht, insbesondere klemmend gehalten. Denkbar ist allerdings auch, dass der dritte Bereich 53 der Schraubenfeder 5 nicht mit dem Anschlag 411 verbunden ist, sondern z.B. mit einem von dem Anschlag 411 beabstandeten Abschnitt des Spulenträgers 3 oder des Gehäuses 23.

Die beiden anderen Bereiche (d.h. der erste und der zweite Bereich 51, 52) der Schraubenfeder 5 sind analog zu den entsprechenden Bereichen der Schraubenfeder des ersten oder des zweiten Ausführungsbeispiels ausgebildet (s.o). Insbesondere ist der erste Bereich 51 über eine Nut 213 mit dem Arretierbolzen 21 gekoppelt und sichert so die Kraftübertragung zwischen der Schraubenfeder 5 und dem Arretierbolzen 21. Der zweite Bereich 52 ist wie in den vorherigen Ausführungsbeispielen als Druckfeder ausgeführt und stützt sich an dem ersten Anschlag 331 ab.

Bei einer Bewegung des Arretierbolzens 21 in die Freigabeposition wird der zweite Bereich 52 der Schraubenfeder 5 durch die über den Elektromagneten des Aktuators auf den Arretierbolzen 21 ausgeübte Kraft gestaucht, während der dritte (als Zugfeder) ausgebildete Bereich 53 gedehnt wird. Im Ergebnis stellt die Schraubenfeder 5 eine Rückstellkraft zur Verfügung, die sich aus den Rückstellkräften der beiden Bereiche 52 und 53 der Schraubenfeder 5 zusammensetzt.

Figur 9 zeigt den Arretierbolzen 21 und die Schraubenfeder 5 des dritten Ausführungsbeispiels in der Arretierposition der Arretiervorrichtung 2. Wie bereits oben erläutert, wird der Arretierbolzen 21 nach einer Unterbrechung der Bestromung der Spule 31 des Elektromagneten des Aktuators durch die Schraubenfeder 5 bewegt, wobei über deren zweiten Bereich 52 eine Druckkraft und durch den dritten Bereich 53 der Schraubenfeder 5 eine Zugkraft in den Arretierbolzen 21 eingeleitet wird. Der zweite Bereich 52 der Schraubenfeder 5 dehnt sich, während sich der dritte Bereich 53 zusammenzieht und an dem zweiten Anschlag 411 abstützt. Zu erkennen ist der geringe Abstand der Windungen des dritten Bereiches 53. Bei einer entsprechenden Auslegung können die Windungen in der Arretierposition auch aneinander anliegen und so die Bewegung des Arretierbolzens 21 elastisch abbremsen.

Über die Abstimmung der Federkennlinien des zweiten und dritten Bereichs 52, 53 der Schraubenfeder 5 aufeinander lässt sich das elastische Abbremsen des Arretierbolzens 21 und damit die Verminderung der Geräuschentwicklung einstellen. Gleiches gilt auch für die Rückbewegung des Arretierbolzens 21 in die Freigabeposition, wobei hierbei noch die durch den Elektromagneten des Aktuators aufgebrachte Haltekraft als Einflussparameter hinzukommt.

Die Federkennlinien der beiden Bereiche der Schraubenfeder 5 können dabei unterschiedliche Verläufe und z.B. jeweils einen flacheren Verlauf (geringere Kräfte für identische Wege) als die Schraubenfedern des ersten und der zweiten Ausführungsbeispiels der Arretiervorrichtung aufweisen. Auch kann der Durchmesser des Federdrahtes, aus dem die Schraubenfeder 5 gewickelt ist, geringer sein als in den vorherigen Ausführungsbeispielen.

Die im Zusammenhang mit Figuren 8 und 9 beschriebene Ausführung der Schraubenfeder 5 gewährleistet insbesondere die Arretierfunktion (Verriegelungsfunktion) der Arretiervorrichtung 2 auch dann, wenn einer der Bereiche 52, 53 der Schraubenfeder 5 beschädigt (z.B. gebrochen) ist, da dennoch ein intakter Bereich (entweder der zweite oder der dritte Bereich 52, 53) der Schraubenfeder 5 zur Bewegung des Arretierbolzens 21 zur Verfügung steht.

Figur 10 zeigt den Arretierbolzen 21 des dritten Ausführungsbeispiels mit der darauf montierten Schraubenfeder 5 in einer Seitenansicht. Die übrigen Komponenten der Arretiervorrichtung 2 sind in Fig. 10 nicht mit dargestellt.

In Figur 11 ist eine alternative Ausführung der Schraubenfeder 5 für das dritte Ausführungsbeispiel der erfindungsgemäßen Arretiervorrichtung zusammen mit dem Arretierbolzen 21 in einer perspektivischen Ansicht dargestellt. Vorliegend ragt das der zu arretierenden Komponente zuzuwendende Ende 531 des dritten Bereiches 53 der Schraubenfeder 5 tangential von der letzten Windung des dritten Bereiches 53 nach außen (tangential abragender Abschnitt 532 des dritten Bereiches 53) und ist anschließend abgewinkelt (abgewinkelter Abschnitt 533). Der tangential abragende Abschnitt 532 und der abgewinkelte Abschnitt 533 dienen zur Befestigung des dritten Bereiches 53 der Schraubenfeder 5 relativ zu dem Gehäuse 23 und/oder dem Spulenträger 3.

Figur 12 zeigt die Schraubenfeder 5 der Figur 11 in der teilweise montierten Arretiervorrichtung. Der abgewinkelte Abschnitt 533 und ein Teil des Abschnitts 532 des dritten Bereiches 53 sind in einer Vertiefung 341 in einer dem der zu arretierenden Komponente zuzuwendenden Seite des flanschartigen Abschlussabschnitts 325 des Spulenträgers 3 angeordnet. Die Vertiefung 341 wird bei der abschließenden Montage der Arretiervorrichtung 2 durch den Abschnitt 232 des Gehäuses 23 abgedeckt und die Abschnitte 532, 533 somit in der Vertiefung 341 fixiert; vgl. Fig. 8 oder 9. Ziel der im Zusammenhang mit den Figuren 11 und 12 beschriebenen Ausführung der Schraubenfeder 5 ist insbesondere eine positionsgenaue und/oder verdrehsichere Anordnung der Schraubenfeder 5 in der Arretiervorrichtung 2.

## Patentansprüche

1. Arretiervorrichtung für einen Überlagerungsantrieb einer Überlagerungslenkung zum Arretieren einer bewegbaren Komponente, mit
- einem zwischen einer Arretier- und Freigabeposition hin- und herbewegbaren Arretierelement (21), das in der Arretierposition mit der bewegbaren Komponente (22) zusammenwirkt; und
- einem mit dem Arretierelement (21) gekoppelten elastischen Element (5) zum Bewegen des Arretierelementes (21),
- mindestens einem Anschlag (411), wobei das Arretierelement (21) relativ zu dem Anschlag (411) bewegbar ist,
**dadurch gekennzeichnet, dass**
das elastische Element (5) so beschaffen und mit dem Arretierelement (21) gekoppelt ist, dass es sich zumindest in der Arretierposition des Arretierelementes (21) in Kontakt mit dem Anschlag (411) befindet, wobei der Anschlag (411) so angeordnet ist, dass durch den Kontakt des elastischen Elementes (5) mit dem Anschlag (411) eine Bewegung des Arretierelementes (21) in die Arretierposition begrenzt wird.

2. Arretiervorrichtung nach Anspruch 1, **dadurch gekennzeichnet, dass** sich der Anschlag (411) zumindest teilweise auf einer der zu arretierenden Komponente zuzuwendenden Seite des elastischen Elementes (5) befindet.

3. Arretiervorrichtung nach Anspruch 1 oder 2, **gekennzeichnet durch** einen ersten Anschlag (331), wobei das elastische Element (5) so beschaffen und mit dem Arretierelement (21) gekoppelt ist, dass es sich zumindest in der Freigabeposition des Arretierelementes (21) in Kontakt mit dem ersten Anschlag (331) befindet, und wobei der Anschlag (411), mit dem sich das elastische Element (5) zumindest in der Arretierposition des Arretierelementes (21) in Kontakt befindet, ein zweiter Anschlag der Arretiervorrichtung (2) ist.

4. Arretiervorrichtung nach einem der vorhergehenden Ansprüche, **dadurch gekennzeichnet, dass** ein Bereich des elastischen Elementes (5) mit dem Arretierelement gekoppelt ist und sich ein anderer Bereich des elastischen Elementes (5) zumindest in der Arretierposition des Arretierelementes (21) in Kontakt mit dem Anschlag (411) befindet.

5. Arretiervorrichtung nach Anspruch 4, **dadurch gekennzeichnet, dass** der mit dem Arretierelement (21) gekoppelte Bereich des elastischen Elementes (5) einen geringeren Durchmesser aufweist als der andere Bereich des elastischen Elementes (5).

6. Arretiervorrichtung nach Anspruch 4 oder 5, **dadurch gekennzeichnet, dass** der andere Bereich des elastischen Elementes (5) einen Durchmesser aufweist, der größer als der Außendurchmesser eines freien Endes (211) des Arretierelementes (21) ist.

7. Arretiervorrichtung nach den vorhergehenden Ansprüchen soweit rückbezogen auf die Ansprüche 3 und 4, **dadurch gekennzeichnet, dass** der mit dem Arretierelement (21) gekoppelte Bereich des elastischen Elementes (5) ein erster Bereich (51) des elastischen Elementes (5) ist, wobei das elastische Element (5) einen zweiten Bereich (52) aufweist, der sich zumindest in der Freigabeposition des Arretierelementes (21) in Kontakt mit dem ersten Anschlag (331) befindet, und wobei der andere Bereich des elastischen Elementes (5) ein dritter Bereich (53) des elastischen Elementes (5) ist, der sich zumindest in der Arretierposition des Arretierelementes (21) in Kontakt mit dem zweiten Anschlag befindet.

8. Arretiervorrichtung nach Anspruch 7, **dadurch gekennzeichnet, dass** sich der erste Bereich (51) des elastischen Elementes (5) - entlang der Längserstreckungsrichtung des elastischen Elementes (5) betrachtet - vor dem zweiten Bereich (52) des elastischen Elementes (5) befindet.

9. Arretiervorrichtung nach einem der vorhergehenden Ansprüche, **dadurch gekennzeichnet, dass** das elastische Element (5) dadurch mit dem Arretierelement (21) gekoppelt ist, dass es an einem Abschnitt (213) des Arretierelements (21) anliegt, der einen gegenüber den übrigen Bereichen des Arretierelementes (21) verminderten Durchmesser aufweist.

10. Arretiervorrichtung nach einem der vorhergehenden Ansprüche soweit rückbezogen auf Anspruch 3, **gekennzeichnet durch** einen dritten Anschlag (324), wobei das Arretierelement (21) auch relativ zu dem dritten Anschlag (324) bewegbar ist, und wobei das elastische Element (5) so beschaffen und mit dem Arretierelement (21) gekoppelt ist, dass es bei einer Bewegung des Arretierelementes (21) in die Freigabeposition in Kontakt mit dem dritten Anschlag (324) kommt.

11. Arretiervorrichtung nach einem der vorhergehenden Ansprüche, **dadurch gekennzeichnet, dass** das elastische Element (5) relativ zu dem Anschlag (411) so festgelegt und zumindest teilweise als Zugelement ausgebildet ist, dass es bei einer Bewegung des Arretierelementes (21) in die Freigabeposition zumindest teilweise gespannt wird.

12. Arretiervorrichtung nach einem der vorhergehenden Ansprüche, **dadurch gekennzeichnet, dass** es sich bei dem elastischen Element (5) um eine Schraubenfeder handelt.

13. Arretiervorrichtung nach Anspruch 12 soweit rückbezogen auf Anspruch 7, **dadurch gekennzeichnet, dass** der erste Bereich (51) der Schraubenfeder mehrere Windungen aufweist, deren Abstand zueinander auch im entspannten Zustand der Schraubenfeder geringer ist als der Abstand zwischen Windungen des zweiten Bereichs (52) der Schraubenfeder.

14. Arretiervorrichtung nach Anspruch 12 oder 13 soweit rückbezogen auf Anspruch 7, **dadurch gekennzeichnet, dass** der dritte Bereich (53) der Schraubenfeder mehrere Windungen aufweist, wobei sich die Windungen zumindest näherungsweise in einer gemeinsamen Ebene erstrecken.

15. Arretiervorrichtung gemäß einem der vorhergehenden Ansprüche, zum Arretieren einer bewegbaren Komponente, mit
- einem zwischen einer Arretier- und Freigabeposition hin- und herbewegbaren Arretierelement (21), das in der Arretierposition mit der bewegbaren Komponente (22) zusammenwirkt; und
- einem elastischen Element (5) zum Bewegen des Arretierelementes (21), wobei das elastische Element (5) einen mit dem Arretierelement (21) gekoppelten Bereich aufweist,
**dadurch gekennzeichnet, dass**
ein anderer Bereich des elastischen Elements (5) an einem gegenüber einer Bewegung des Arretierelementes (21) ortsfesten Teil der Arretiervorrichtung (2) derart festgelegt ist, dass das elastische Element (5) bei einer Bewegung des Arretierelements (21) in die Arretier- und/oder Freigabeposition zumindest teilweise auseinandergezogen und gespannt wird.

16. Überlagerungsantrieb für eine Überlagerungslenkung eines Kraftfahrzeuges mit einer Arretiervorrichtung (2) gemäß einem der vorhergehenden Ansprüche.

## Claims

1. Locking device for a superposition drive of a superposition steering system for locking a movable component, having
- a locking element (21) which is movable back and forth between a locking and release position and which interacts with the movable component (22) in the locking position; and
- an elastic element (5) coupled to the locking element (21) and intended for moving the locking element (21),
- at least one stop (411), wherein the locking element (21) is movable relative to the stop (411),
**characterized in that**
the elastic element (5) is designed and coupled to the locking element (21) in such a way that it is in contact with the stop (411) at least in the locking position of the locking element (21), wherein the stop (411) is arranged in such a way that a movement of the locking element (21) into the locking position is limited by contact between the elastic element (5) and the stop (411).

2. Locking device according to Claim 1, **characterized in that** the stop (411) is at least partially situated on a side of the elastic element (5) that is to face the component to be locked.

3. Locking device according to Claim 1 or 2, **characterized by** a first stop (331), wherein the elastic element (5) is designed and coupled to the locking element (21) in such a way that it is in contact with the first stop (331) at least in the release position of the locking element (21), and wherein the stop (411), with which the elastic element (5) is in contact at least in the locking position of the locking element (21), is a second stop of the locking device (2).

4. Locking device according to one of the preceding claims, **characterized in that** a region of the elastic element (5) is coupled to the locking element, and another region of the elastic element (5) is in contact with the stop (411) at least in the locking position of the locking element (21).

5. Locking device according to Claim 4, **characterized in that** the region of the elastic element (5) that is coupled to the locking element (21) has a smaller diameter than the other region of the elastic element (5).

6. Locking device according to Claim 4 or 5, **characterized in that** the other region of the elastic element (5) has a diameter which is greater than the external diameter of a free end (211) of the locking element (21).

7. Locking device according to the preceding claims where referring back to Claims 3 and 4, **characterized in that** the region of the elastic element (5) that is coupled to the locking element (21) is a first region (51) of the elastic element (5), wherein the elastic element (5) has a second region (52) which is in contact with the first stop (331) at least in the release position of the locking element (21), and wherein the other region of the elastic element (5) is a third region (53) of the elastic element (5) that is in contact with the second stop at least in the locking position of the locking element (21).

8. Locking device according to Claim 7, **characterized in that** the first region (51) of the elastic element (5) - as viewed along the direction of longitudinal extent of the elastic element (5) - is situated ahead of the second region (52) of the elastic element (5).

9. Locking device according to one of the preceding claims, **characterized in that** the elastic element (5) is coupled to the locking element (21) by virtue of bearing against a portion (213) of the locking element (21) that has a diameter which is reduced by comparison with the remaining regions of the locking element (21).

10. Locking device according to one of the preceding claims where referring back to Claim 3, **characterized by** a third stop (324), wherein the locking element (21) is also movable relative to the third stop (324), and wherein the elastic element (5) is designed and coupled to the locking element (21) in such a way that it comes into contact with the third stop (324) during a movement of the locking element (21) into the release position.

11. Locking device according to one of the preceding claims, **characterized in that** the elastic element (5) is fixed relative to the stop (411) and formed at least partially as a tension element in such a way that it is at least partially tensioned during a movement of the locking element (21) into the release position.

12. Locking device according to one of the preceding claims, **characterized in that** the elastic element (5) is a helical spring.

13. Locking device according to Claim 12 where referring back to Claim 7, **characterized in that** the first region (51) of the helical spring has a plurality of windings whose spacing from one another, even in the relaxed state of the helical spring, is smaller than the spacing between windings of the second region (52) of the helical spring.

14. Locking device according to Claim 12 or 13 where referring back to Claim 7, **characterized in that** the third region (53) of the helical spring has a plurality of windings, wherein the windings extend at least approximately in a common plane.

15. Locking device according to one of the preceding claims for locking a movable component, having
- a locking element (21) which is movable back and forth between a locking and release position and which interacts with the movable component (22) in the locking position; and
- an elastic element (5) for moving the locking element (21), wherein the elastic element (5) has a region which is coupled to the locking element (21),
**characterized in that**
another region of the elastic element (5) is fastened to a part of the locking device (2) that is positionally fixed with respect to a movement of the locking element (21), in such a way that the elastic element (5) is at least partially stretched and tensioned during a movement of the locking element (21) into the locking and/or release position.

16. Superposition drive for a superposition steering system of a motor vehicle having a locking device (2) according to one of the preceding claims.

## Revendications

1. Dispositif de blocage pour un entraînement à superposition d'une direction à superposition, servant à bloquer un composant mobile, comprenant
- un élément de blocage (21) pouvant être animé d'un mouvement de va-et-vient entre une position de blocage et une position de libération, lequel élément de blocage coopère, dans la position de blocage, avec le composant mobile (22); et
- un élément élastique (5) accouplé à l'élément de blocage (21) pour déplacer l'élément de blocage (21),
- au moins une butée (411), l'élément de blocage (21) étant mobile par rapport à la butée (411),
**caractérisé en ce que**
l'élément élastique (5) est réalisé et accouplé à l'élément de blocage (21) de telle sorte qu'il se trouve en contact avec la butée (411) au moins dans la position de blocage de l'élément de blocage (21), la butée (411) étant disposée de telle sorte qu'un déplacement de l'élément de blocage (21) dans la position de blocage est limité par le contact de l'élément élastique (5) avec la butée (411).

2. Dispositif de blocage selon la revendication 1, **caractérisé en ce que** la butée (411) se trouve au moins partiellement sur un côté de l'élément élastique (5) à tourner vers le composant à bloquer.

3. Dispositif de blocage selon la revendication 1 ou 2, **caractérisé par** une première butée (331), dans lequel l'élément élastique (5) étant réalisé et accouplé à l'élément de blocage (21) de telle sorte qu'il se trouve en contact avec la première butée (331) au moins dans la position de libération de l'élément de blocage (21), et la butée (411) avec laquelle l'élément élastique (5) se trouve en contact au moins dans la position de blocage de l'élément de blocage (21) étant une deuxième butée du dispositif de blocage (2).

4. Dispositif de blocage selon l'une des revendications précédentes, **caractérisé en ce qu'**une région de l'élément élastique (5) est accouplée à l'élément de blocage et une autre région de l'élément élastique (5) se trouve en contact avec la butée (411) au moins dans la position de blocage de l'élément de blocage (21).

5. Dispositif de blocage selon la revendication 4, **caractérisé en ce que** la région de l'élément élastique (5) accouplée à l'élément de blocage (21) présente un diamètre inférieur à celui de l'autre région de l'élément élastique (5).

6. Dispositif de blocage selon la revendication 4 ou 5, **caractérisé en ce que** l'autre région de l'élément élastique (5) présente un diamètre qui est supérieur au diamètre extérieur d'une extrémité libre (211) de l'élément de blocage (21).

7. Dispositif de blocage selon les revendications précédentes lorsqu'elles dépendent des revendications 3 et 4, **caractérisé en ce que** la région de l'élément élastique (5) accouplée à l'élément de blocage (21) est une première région (51) de l'élément élastique (5), dans lequel l'élément élastique (5) comprenant une deuxième région (52) qui se trouve en contact avec la première butée (331) au moins dans la position de libération de l'élément de blocage (21), et dans lequel l'autre région de l'élément élastique (5) étant une troisième région (53) de l'élément élastique (5) qui se trouve en contact avec la deuxième butée au moins dans la position de blocage de l'élément de blocage (21).

8. Dispositif de blocage selon la revendication 7, **caractérisé en ce que** la première région (51) de l'élément élastique (5), considérée le long de la direction d'étendue longitudinale de l'élément élastique (5), se trouve devant la deuxième région (52) de l'élément élastique (5).

9. Dispositif de blocage selon l'une des revendications précédentes, **caractérisé en ce que** l'élément élastique (5) est accouplé à l'élément de blocage (21) par le fait qu'il s'applique contre une partie (213) de l'élément de blocage (21) qui présente un diamètre réduit par rapport aux régions restantes de l'élément de blocage (21).

10. Dispositif de blocage selon l'une des revendications précédentes lorsqu'elle dépend de la revendication 3, **caractérisé par** une troisième butée (324), dans lequel l'élément de blocage (21) étant également mobile par rapport à la troisième butée (324), et dans lequel l'élément élastique (5) étant réalisé et accouplé à l'élément de blocage (21) de telle sorte qu'il vient en contact avec la troisième butée (324) lors d'un déplacement de l'élément de blocage (21) dans la position de libération.

11. Dispositif de blocage selon l'une des revendications précédentes, **caractérisé en ce que** l'élément élastique (5) est fixé par rapport à la butée (411) et réalisé au moins partiellement sous forme d'élément de traction, de telle sorte qu'il est au moins partiellement tendu lors d'un déplacement de l'élément de blocage (21) dans la position de libération.

12. Dispositif de blocage selon l'une des revendications précédentes, **caractérisé en ce que** l'élément élastique (5) est un ressort hélicoïdal.

13. Dispositif de blocage selon la revendication 12 lorsqu'elle dépend de la revendication 7, **caractérisé en ce que** la première région (51) du ressort hélicoïdal comprend plusieurs spires dont l'écartement les unes par rapport aux autres est, même dans l'état détendu du ressort hélicoïdal, inférieur à l'écartement entre les spires de la deuxième région (52) du ressort hélicoïdal.

14. Dispositif de blocage selon la revendication 12 ou 13 lorsqu'elle dépend de la revendication 7, **caractérisé en ce que** la troisième région (53) du ressort hélicoïdal comprend plusieurs spires, les spires s'étendant au moins approximativement dans un plan commun.

15. Dispositif de blocage selon l'une des revendications précédentes, servant à bloquer un composant mobile, comprenant
- un élément de blocage (21) pouvant être animé d'un mouvement de va-et-vient entre une position de blocage et une position de libération, lequel élément de blocage coopère, dans la position de blocage, avec le composant mobile (22); et
- un élément élastique (5) servant à déplacer l'élément de blocage (21), l'élément élastique (5) comprenant une région accouplée à l'élément de blocage (21),
**caractérisé en ce**
**qu'**une autre région de l'élément élastique (5) est fixée à une partie du dispositif de blocage (2) immobile par rapport à un déplacement de l'élément de blocage (21), de telle sorte que l'élément élastique (5) soit au moins partiellement étiré et tendu lors d'un déplacement de l'élément de blocage (21) dans la position de blocage et/ou de libération.

16. Entraînement à superposition pour une direction à superposition d'un véhicule automobile comprenant un dispositif de blocage (2) selon l'une des revendications précédentes.
